# EUROPÄISCHE PATENTSCHRIFT

(11) **EP 4 034 395 B1**
(45) Veröffentlichungstag und Bekanntmachung des Hinweises auf die Patenterteilung: **08.11.2023**
(21) Anmeldenummer: 20775836.8
(22) Anmeldetag: 15.09.2020
(51) Int. Cl.: B60H 1/22, B60H 1/00

(54) **VERFAHREN ZUM KLIMATISIEREN**
METHOD FOR CLIMATE CONTROL
PROCÉDÉ DE CLIMATISATION

(30) Priorität: 24.09.2019 DE 102019125649
(43) Veröffentlichungstag der Anmeldung: 03.08.2022
(73) Patentinhaber: Audi AG, 85045 Ingolstadt (DE)
(72) Erfinder: REITBERGER, Andreas, 86558 Hohenwart (DE); KIRCHHOFF, Ralph, 85080 Gaimersheim (DE); SCHMANDT, Bastian, 85051 Ingolstadt (DE)
(86) Internationale Anmeldenummer: PCT/EP2020/075681
(87) Internationale Veröffentlichungsnummer: WO 2021/058316

(56) Entgegenhaltungen:
- EP-A1- 1 669 226
- EP-B1- 1 669 226
- DE-A1- 19 943 762
- DE-A1- 19 954 571
- DE-A1-102010 060 881

## Beschreibung

Die Erfindung betrifft ein Verfahren zum Klimatisieren und eine Klimavorrichtung.

Ein Fahrzeug kann über eine Heizung verfügen. Bei einer konventionellen Verbrennungskraftmaschine wird zum Heizen eines Innenraums des Fahrzeugs Motorabwärme genutzt, bei einem Elektrofahrzeug ist eine elektrische Heizung vorgesehen.

Eine elektrische Heizung kann im Gegensatz zu einer konventionellen Heizung ohne weitere Maßnahmen beliebig heiß werden, wenn kein ausreichender Luftmassenstrom zur Durchströmung verfügbar ist. Dies kann dann der Fall sein, wenn ein Teilmassestrom am Zuheizer vorbeigeleitet wird. Ebenso ist es denkbar, dass einzelne Zonen des Zuheizers, die voneinander getrennt gesteuert werden können, aufgrund asymmetrischer Klimatisierungseinstellungen in verschiedenen Zonen einer Fahrgastzelle unterschiedlich stark und ggf. unzureichend durchströmt werden.

Eine elektrische Heizung kann durch eine Temperaturerhöhung eine Erhöhung eines elektrischen Widerstands verursachen. Dadurch kommt es zu einer Leistungsbegrenzung und im Fehlerfall zu einer Verringerung der Temperatur. Zusätzlich gibt es Vorrichtungen zur Notabschaltung, die bei Übertemperatur eine Heizleistung stufenweise vermindern oder die Heizung komplett deaktivieren. Eine Notabschaltung bewirkt einen instationären Betrieb, der zu Temperaturschwankungen im Innenraum führt. Außerdem kommt es durch hohe Temperaturgradienten zu unnötigen Materialbelastungen.

Die Druckschrift DE 10 2010 000 990 B4 beschreibt ein Verfahren zum Betrieb eines Klimatisierungssystems.

Eine Wärmeüberträgeranordnung zur Erwärmung von Luft ist aus der Druckschrift DE 10 2012 108 886 A1 bekannt.

Eine elektrische Zusatzheizung für ein Kraftfahrzeug ist in der Druckschrift EP 2 402 209 A1 beschrieben.

Das Dokument DE 10 2010 060881 A1 beschreibt ein Verfahren zum Klimatisieren, bei dem ein Gesamtluftstrom durch einen Zuheizer auf Fahrer- und Beifahrerseite aufgeteilt wird und eine entsprechende Temperaturregelung erfolgt.

Vor diesem Hintergrund war es eine Aufgabe, eine Klimavorrichtung effektiv zu betreiben.

Diese Aufgabe wird durch ein Verfahren und eine Klimavorrichtung mit den Merkmalen der unabhängigen Patentansprüche 1 und 7 gelöst. Ausführungsformen des Verfahrens und der Klimavorrichtung gehen aus den abhängigen Patentansprüchen hervor.

Das erfindungsgemäße Verfahren ist zum Klimatisieren, d. h. zum Heizen und/oder Kühlen, mit einer Ausführungsform der Klimavorrichtung vorgesehen, wobei ein in einer Strömungsrichtung strömender Gesamtmassenstrom an Luft durch einen elektrischen Zuheizer bzw. ein elektrisches Zuheizelement, der bzw. das mehrere Zonen aufweist, geleitet wird, wobei der Gesamtmassenstrom nach Durchströmen des Zuheizers in mehrere Teilmassenströme aufgeteilt wird, wobei jeweils aus einer n-ten Zone des Zuheizers ein n-ter Teilmassenstrom strömt, der aus dem Gesamtmassenstrom resultiert, wobei ein jeweiliger n-ter Teilmassenstrom in einer jeweiligen Strömungsrichtung, bspw. einer n-ten Strömungsrichtung, nach Ausströmen aus dem Zuheizer und/oder nach Durchströmen des Zuheizers strömt. Dabei wird ein Wert mindestens eines Strömungsparameters des Gesamtmassenstroms und/oder der resultierenden Teilmassenströme ermittelt. Außerdem wird mindestens eine Stellgröße, bspw. eine Heizleistung einer jeweiligen n-ten Zone des Zuheizers, aus der der n-te Teilmassenstrom strömt und/oder durch die der n-te Teilmassenstrom strömt, abhängig von einem Wert des mindestens einen Strömungsparameters des Gesamtmassenstroms und/oder von einem Wert des mindestens einen Strömungsparameters mindestens eines Teilmassenstroms eingestellt.

Die Klimavorrichtung weist neben dem Zuheizer ein Gebläse zum Bereitstellen des Gesamtmassenstroms und mindestens eine Klappe auf. Dabei ist das Gebläse in Strömungsrichtung vor dem Zuheizer und die mindestens eine Klappe dahinter angeordnet.

Erfindungsgemäß wird der Wert des mindestens einen Strömungsparameters des n-ten Teilmassenstroms berechnet und/oder simuliert und somit ermittelt. Hierbei ist es möglich, als Eingangswert mindestens einen Betriebsparameter des Gebläses, bspw. dessen Drehmoment und/oder dessen Drehzahl, mindestens einen Betriebsparameter des Zuheizers und/oder mindestens einen Betriebsparameter, bspw. eine jeweilige Stellung, der mindestens einen Klappe zu berücksichtigen und daraus den mindestens einen Strömungsparameter des n-ten Teilmassenstroms zu berechnen. Der mindestens eine Betriebsparameter des Zuheizers hängt von einer jeweiligen Zone ab, durch die der Gesamtmassenstrom strömt. Unter Berücksichtigung des mindestens einen Betriebsparameters des Gebläses kann auch mindestens ein Strömungsparameter des Gesamtmassenstroms berechnet werden, wobei der mindestens eine Strömungsparameter des Gesamtmassenstroms auch gemessen und somit detektiert bzw. erfasst werden kann.

Weiterhin wird ein Betrag des mindestens einen Strömungsparameters aus jeweiligen Werten des mindestens einen Strömungsparameters sämtlicher Teilmassenströme durch ein Modell berechnet und/oder simuliert, so dass der Betrag aller Teilmassenströme durch das Modell berechnet und/oder simuliert werden kann. Bei dem Modell wird eine integrale Messgröße, z. B. der Gesamtmassenstrom, aufgrund eines Betriebs des Gebläses verwendet.

Außerdem wird eine Aufspaltung in Teilmassenströme aufgrund der Stellung der mindestens einen Klappe berücksichtigt und/oder vorgenommen.

Hierbei resultiert ein jeweiliger n-te Teilmassenstrom aus einem jeweiligen n-ten Anteil des ursprünglichen Gesamtmassenstroms, der eine jeweilige n-te Zone durchströmt bzw. durchströmt hat. Der in seiner Strömungsrichtung strömende Gesamtmassenstrom weist den Wert, bspw. ursprünglichen Wert, des mindestens einen Strömungsparameters auf, der vor Durchströmen des Zuheizers gegeben ist. Nach Durchströmen des Zuheizers resultieren aus dem Gesamtmassenstrom die Teilmassenströme, wobei ein n-ter Teilmassenstrom in seiner jeweiligen, bspw. n-ten Strömungsrichtung strömt und einen Wert, bspw. einen n-ten Wert, des mindestens einen Strömungsparameters aufweist. Hierbei resultiert der n-te Wert des mindestens einen Strömungsparameters des n-ten Teilmassenstroms aus dem ursprünglichen Wert des mindestens einen Strömungsparameters des Gesamtmassenstroms bzw. des jeweiligen n-ten Anteils des Gesamtmassenstroms nach Durchströmen des Zuheizers, wobei der Wert des mindestens einen Strömungsparameters durch thermische Eigenschaften des Zuheizers, bspw. einer jeweiligen Zone des Zuheizers, verändert wird, wobei die Zonen unterschiedliche thermische Eigenschaften aufweisen können. Die Strömungsrichtungen des Gesamtmassenstroms und der einzelnen Teilmassenströme sind in der Regel zueinander parallel orientiert.

Die Stellgröße bzw. ein Betriebsparameter kann bspw. eine Temperatur und/oder die Heizleistung der jeweiligen n-ten Zone sein, aus der deren jeweilige thermische Eigenschaft resultiert. Üblicherweise weisen die Zuheizer bspw. aufgrund einer asymmetrischen Klimaeinstellung unterschiedliche Temperaturen auf und sind demnach je nach Definition unterschiedlich heiß bzw. warm oder kalt bzw. kühl. Durch Kontrollieren, d. h. durch Steuern und/oder Regeln der Heizleistung und/oder Temperatur der einzelnen Zonen können innerhalb der Klimavorrichtung Temperaturschwankungen bzw. Temperaturgradienten vermieden werden.

In Ausgestaltung wird der Wert des mindestens einen Strömungsparameters des Gesamtmassenstroms von einem als Gesamtdetektor ausgebildeten Detektor der Klimavorrichtung, der in der Strömungsrichtung des Gesamtmassenstroms vor dem Zuheizer angeordnet ist, detektiert bzw. gemessen. Alternativ oder ergänzend wird des Wert des mindestens einen Strömungsparameters eines n-ten Teilmassenstroms von einem n-ten Teildetektor als Detektor der Klimavorrichtung, der in Strömungsrichtung des n-ten Teilmassenstroms hinter dem n-ten Zuheizelement angeordnet ist, detektiert bzw. gemessen.

Als Strömungsparameter können die Temperatur, ein Druck oder eine Strömungsgeschwindigkeit des Gesamtmassenstroms und/oder der Teilmassenströme ermittelt, d. h. berechnet und/oder erfasst und somit detektiert werden.

Außerdem wird der n-te Teilmassenstrom durch mindestens eine n-te Klappe, die in Strömungsrichtung des n-ten Teilmassenstroms hinter der n-ten Zone des Zuheizelements angeordnet ist, umgeleitet, wobei eine Stellung der n-ten Klappe in Abhängigkeit des ermittelten Werts des mindestens einen Strömungsparameters des n-ten Teilmassenstroms und/oder des Gesamtmassenstroms kontrolliert, bspw. gesteuert und/oder geregelt, bspw. eingestellt wird. Eine jeweilige Klappe ist als Temperaturklappe und/oder Luftklappe ausgebildet bzw. zu bezeichnen.

Das Verfahren ist zum Klimatisieren eines Fahrzeugs, bspw. eines Innenraums eines Fahrzeugs, vorgesehen.

Mit einer Ausgestaltung des Verfahrens wird eine Überhitzung bzw. zu hohe Temperatur von mindestens einer Zone des Zuheizers, also einer Zone oder mehrerer Zonen, vermieden, wodurch für den Zuheizer ein Übertemperaturschutz bereitgestellt wird. Somit kann auch eine Überhitzung der nachfolgend beschriebenen Klimavorrichtung, die den Zuheizer aufweist, vermieden werden.

Die erfindungsgemäße Klimavorrichtung weist einen Zuheizer mit mehreren Zonen und ein Steuergerät auf, wobei der Zuheizer dazu ausgebildet ist, einen Gesamtmassenstrom an Luft, der durch den Zuheizer geleitet wird, nach Durchströmen des Zuheizers in mehrere Teilmassenströme aufzuteilen, wobei jeweils aus einer n-ten Zone des Zuheizers ein n-ter Teilmassenstrom strömt, wobei der n-te Teilmassenstrom aus einem n-ten Anteil des Gesamtmassenstroms resultiert, wobei der n-te Anteil des Gesamtmassenstroms die n-te Zone durchströmt und als n-ter Teilmassenstrom aus der n-ten Zone strömt. Das Steuergerät ist dazu ausgebildet, einen Wert mindestens eines Strömungsparameters des Gesamtmassenstroms und/oder der resultierenden Teilmassenströme zu ermitteln und mindestens eine Stellgröße, bspw. eine Heizleistung, einer jeweiligen n-ten Zone des Zuheizers abhängig von dem Wert des mindestens einen Strömungsparameters des Gesamtmassenstroms und/oder mindestens eines Teilmassenstroms einzustellen. Hierzu wird die Heizleistung der jeweiligen Zone durch Einstellen eines elektrischen Stroms, der durch eine jeweilige Zone fließt, und/oder einer elektrischen Spannung, die an der jeweiligen Zone anliegt, eingestellt.

Die elektrische Klimavorrichtung weist auch ein Gebläse bzw. einen Lüfter auf, das bzw. der dazu ausgebildet ist, den Gesamtmassenstrom an Luft zu erzeugen und durch die Zonen des Zuheizers zu leiten. Dabei ist das Gebläse innerhalb der Klimavorrichtung in Strömungsrichtung des Gesamtmassenstroms vor dem Zuheizer angeordnet.

Außerdem weist die Klimavorrichtung mindestens eine Klappe auf, die in Strömungsrichtung des Gesamtmassenstroms hinter dem Zuheizer angeordnet ist. Die Klimavorrichtung kann auch ein Klimagerät aufweisen, das in Strömungsrichtung des Gesamtmassenstroms hinter dem Zuheizer angeordnet ist. Dabei sind die Klappen, d. h. Temperatur- und/oder Luftklappen zwischen dem Zuheizer und dem Klimagerät angeordnet.

Das Klimagerät umfasst weitere Bauteile, bspw. ein weiteres Gebläse, einen weiteren Zuheizer, weitere Klappen und Leitelemente, um eine Luft- und

Temperaturverteilung der Teilmassenströme für verschiedene Ausströmer einzustellen. Üblicherweise ist die Klimavorrichtung dazu ausgebildet, einen Innenraum eines Fahrzeugs, bspw. eines Kraftfahrzeugs, zu klimatisieren. Mit dem Klimagerät kann jeweils ein Teilmassenstrom richtungsabhängig zu einem jeweils vorgesehenen Ausströmer geleitet werden, von dem aus dieser in den Innenraum geleitet wird. Dabei wird mit dem Klimagerät bspw. eine räumliche Verteilung und/oder Schichtung der Temperatur der Luft im Innenraum beeinflusst, so dass in unterschiedlichen Bereichen des Innenraums, bspw. in einem Fußbereich oder einem Kopfbereich, für Insassen des Fahrzeugs jeweils eine hierfür vorgesehene Temperatur eingestellt werden kann.

Ferner weist die Klimavorrichtung optional mindestens einen Detektor bzw. Sensor, bspw. ein Thermometer, ein Druckmessgerät und/oder mindestens ein Anemometer zum Messen einer Geschwindigkeit strömender Luft auf, der dazu ausgebildet ist, einen Wert mindestens eines Strömungsparameters des Gesamtmassenstroms und/oder der resultierenden Teilmassenströme zu detektieren. Ein als Gesamtdetektor ausgebildeter Detektor ist zwischen dem Gebläse und dem Zuheizer angeordnet. Teildetektoren als weitere Detektoren sind in Strömungsrichtung des Gesamtmassenstroms hinter dem Zuheizer und vor dem Klimagerät angeordnet.

Bei einer Ausführungsform des vorgestellten Verfahrens werden einzelne Teilmassenströme, die durch die einzelnen Zonen und somit durch jeweilige Teilbereiche des elektrischen Zuheizers strömen und sich durch Aufteilung des Gesamtmassenstroms durch den Zuheizer ergeben, ermittelt bzw. bestimmt, d. h. berechnet und ggf. detektiert. Auf Grundlage von Werten des mindestens einen Strömungsparameters der Teilmassenströme wird für den Zuheizer durch Einstellen der Stellgrößen eine Betriebsstrategie durchgeführt. Weiterhin wird ein elektrisches Betriebsverhalten des Gebläses bzw. Lüfters, das einen Gebläsemotor bzw. der einen Lüftermotor aufweist, ausgewertet, wodurch der Gesamtmassenstrom an Luft bzw. ein gesamter Luftmassenstrom durch die Klimavorrichtung bzw. Klimaanlage bestimmt wird. Das Betriebsverhalten des Lüfters wird anhand von Stellgrößen des Lüfters und/oder anhand des von ihm erzeugten Gesamtmassenstroms, der von dem Gesamtdetektor erfasst wird, kontrolliert bzw. überwacht sowie ausgewertet.

In Ausgestaltung werden Klappen, d. h. Stellungen der Klappen, und weitere Stellgrößen in dem Klimagerät und den Ausströmern der Klimavorrichtung aufgrund der aus dem Gesamtmassenstrom resultierenden Teilmassenströmen an Luft kontrolliert und/oder überwacht. Dabei kann der ursprüngliche Gesamtmassenstrom an Luft bspw. durch zwei Zonen des elektrischen Zuheizers bspw. in zwei Teilmassenströme, d. h. einen ersten Teilmassenstrom, der aus einem ersten Anteil des Gesamtmassenstroms resultiert, und einen zweiten Teilmassenstrom, der aus einem zweiten Anteil des Gesamtmassenstroms resultiert, aufgeteilt bzw. aufgespalten werden, wobei ein Teilmassenstrom bspw. auch als Bypassmassenstrom ausgebildet sein und/oder bezeichnet werden kann. Dabei ist es möglich, einen Betrag beider Teilmassenströme durch das Modell zu berechnen. In Abhängigkeit mindestens eines Teilmassenstroms, üblicherweise sämtlicher Teilmassenströme, wird eine Heizleistung des elektrischen Zuheizers kontrolliert und somit gesteuert und/oder geregelt, wobei u. a. eine Überhitzung der Klimavorrichtung vermieden werden kann.

Weiterhin ist es möglich, durch Überwachung von Klappen für die verschiedenen Zonen bzw. Klimazonen des Zuheizers und durch Überwachung weiterer Stellgrößen im Klimagerät und den Ausströmern den Gesamtmassenstrom an Luft in verschiedene Teilmassenströme, die aus verschiedene Zonen und/oder durch verschiedene Zonen des elektrischen Zuheizers strömen, aufzuteilen. Dabei kann der jeweilige Betrag aller Teilmassenströme durch das Modell berechnet werden. In Abhängigkeit des mindestens eines Teilmassenstroms, in der Regel aller Teilmassenströme, wird die Heizleistung des Zuheizers kontrolliert, wobei es möglich ist, Stellgrößen, bspw. eine Heizleistung, der einzelnen Zonen unabhängig voneinander zu kontrollieren und eine Überhitzung der Klimavorrichtung zu vermeiden.

Alternativ oder ergänzend wird der Gesamtmassenstrom durch den Zuheizer mit verschiedenen Zonen in verschiedene Teilmassenströme aufgespalten, wobei die einzelnen Zonen kontrolliert und somit gesteuert und/oder geregelt werden. Dabei kann mindestens eine Zone als Bypass ausgebildet sein und/oder bezeichnet werden.

Durch derartige Ausgestaltungen des Verfahrens ist es möglich, eine thermische Überbeanspruchung der Klimavorrichtung zu vermeiden und für die Klimavorrichtung einen kontinuierlichen Regelbetrieb zu ermöglichen, so dass eine ansonsten erforderliche Notabschaltung entfallen kann.

Als erfindungsgemäßes Merkmal des Verfahrens wird ein als Gebläsemodell ausgebildetes Modell verwendet, mit dem unter Zuhilfenahme einer elektrischen Leistung und/oder Drehzahl als Stellgröße des Gebläses, bspw. des Gebläsemotors, der Gesamtmassenstrom als Volumenstrom der Luft berechnet wird, wobei dieser Gesamtmassenstrom durch ein Netzwerkmodell, das in Ausgestaltung die Zonen umfasst und/oder beschreibt, in einzelne Teilmassenströme an Luft aufgespalten wird. Hierbei ist es auch möglich, softwaregesteuert bzw. durch eine Softwarefunktion, die von dem Steuergerät der Klimavorrichtung ausgeführt wird, eine elektrische Leistung als Stellgröße einzelner Zonen oder des gesamten Zuheizers zu limitieren, wobei eine maximal zulässige Temperatur des Zuheizers begrenzt und somit nicht überschritten wird.

Weitere Vorteile und Ausgestaltungen der Erfindung ergeben sich aus der Beschreibung und den beiliegenden Zeichnungen, im Rahmen des Schutzbereiches der durch die Ansprüche festgelegt wird.

Die Erfindung ist anhand einer Ausführungsform in der Zeichnung schematisch dargestellt und wird unter Bezugnahme auf die Zeichnung schematisch und ausführlich beschrieben.

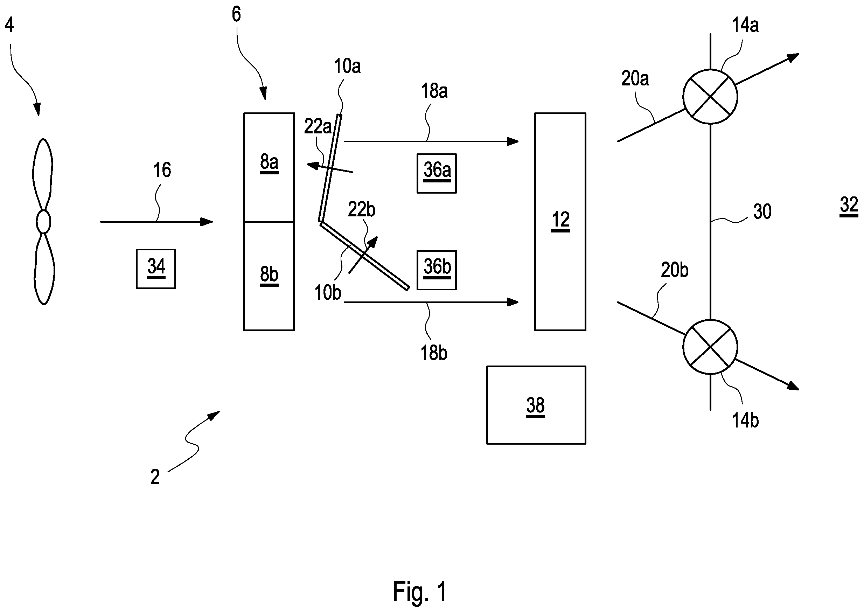

Figur 1 zeigt in schematischer Darstellung eine Ausführungsform der erfindungsgemäßen Klimavorrichtung.

Die anhand von Figur 1 schematisch dargestellte Ausführungsform der Klimavorrichtung 2 umfasst ein Gebläse 4, einen elektrischen Zuheizer 6 mit einer ersten Zone 8a und einer zweiten Zone 8b, eine erste Klappe 10a, eine zweite Klappe 10b, ein Klimagerät 12, einen ersten Ausströmer 14a und einen zweiten Ausströmer 14b.

Diese Klimavorrichtung 2 ist in einem Gehäuse angeordnet, das hier von einer Wand 30 begrenzt ist, in der sich die beiden Ausströmer 14a, 14b als Öffnungen der Klimavorrichtung 2 und/oder der Wand 30 zu einer Umgebung 32 befinden, die von der Klimavorrichtung 2 klimatisiert, d. h. geheizt und/oder gekühlt wird. In einer möglichen Ausgestaltung ist die Klimavorrichtung 2 für ein Fahrzeug, insbesondere für einen Innenraum des Fahrzeugs vorgesehen und dazu ausgebildet, den Innenraum als Umgebung 32 zu klimatisieren.

Bei einem Betrieb der Klimavorrichtung 2 wird von dem Gebläse 4 ein Gesamtmassenstrom an Luft 16 erzeugt, der auf den elektrischen Zuheizer 6 gerichtet wird und diesen durchströmt. Dabei ist vorgesehen, dass der Gesamtmassenstrom 16 von dem Zuheizer 6 hier in zwei Teilmassenströme 18a, 18b, bei einer anderen Ausgestaltung ggf. auch in mehr als zwei Teilmassenströme, aufgeteilt wird. Dabei resultiert der erste Teilmassenstrom 18a aus einem ersten Anteil des Gesamtmassenstroms 16, der durch die erste Zone 8a geströmt ist. Der zweite Teilmassenstrom 18b resultiert aus einem zweiten Anteil des Gesamtmassenstroms 16, der durch die zweite Zone 8b geströmt ist.

Außerdem umfasst die Klimavorrichtung 2 einen als Gesamtdetektor 34 ausgebildeten Detektor, der hier zwischen dem Gebläse 4 und dem Zuheizer 6 angeordnet und dazu ausgebildet ist, einen Wert mindestens eines Strömungsparameters des Gesamtmassenstroms 16, bspw. dessen Temperatur, zu erfassen und somit zu detektieren.

Außerdem umfasst die Klimavorrichtung 2 als weitere Detektoren einen ersten Teildetektor 36a und einen zweiten Teildetektor 36b, wobei der erste Teildetektor 36a hier in Strömungsrichtung des Gesamtmassenstroms 16 bzw. des ersten Teilmassenstroms 18a hinter der ersten Zone 8a und vor dem Klimagerät 12 angeordnet ist. Ein zweiter Teildetektor 36b ist in Strömungsrichtung des Gesamtmassenstroms 16 bzw. des zweiten Teilmassenstroms 18b hinter der zweiten Zone 8b des Zuheizers 6 vor dem Klimagerät 12 angeordnet. Dabei ist ein jeweiliger Teildetektor 36a, 36b dazu ausgebildet, einen Wert mindestens eines Strömungsparameters eines jeweiligen Teilmassenstroms 18a, 18b, der aus einer jeweiligen Zone 8a, 8b des Zuheizers 6 strömt, zu erfassen und somit zu detektieren. Ferner weist die Vorrichtung 2 ein Steuergerät 38 auf, das dazu ausgebildet ist, abhängig von mindestens einem detektierten Massenstrom, d. h. abhängig von dem Wert des mindestens einen Strömungsparameters des mindestens einen Massenstroms, d. h. der Teilmassenströme 18a, 18b und ggf. des Gesamtmassenstroms 16, einen Betrieb der Klimavorrichtung 2 zu kontrollieren und somit zu steuern und/oder zu regeln.

Zum Kontrollieren der Klimavorrichtung wird eine Stellgröße, bspw. eine Heizleistung oder Temperatur, mindestens einer Zone 8a, 8b des Zuheizers und/oder eine Stellgröße mindestens einer Klappe 10a, 10b, bspw. eine Stellung einer jeweiligen Klappe 10a, 10b innerhalb eines jeweiligen Teilmassenstroms 18a, 18b, eingestellt. Eine jeweilige Klappe 10a, 10b ist hier als Temperaturklappe und/oder Luftklappe ausgebildet bzw. zu bezeichnen.

Abhängig von der Stellung der ersten Klappe 10a, die der ersten Zone 8a in Strömungsrichtung des Gesamtmassenstroms 16 nachgeschaltet ist, wird der erste Teilmassenstrom 18a in Strömungsrichtung zu dem Klimagerät 12 gelenkt. Entsprechend wird der zweite Teilmassenstrom 18b abhängig von der Stellung der zweiten Klappe 10b, die in Strömungsrichtung des Gesamtmassenstroms 16 hinter der zweiten Zone 8b angeordnet ist, in Strömungsrichtung zu dem Klimagerät 12 geleitet. Eine mögliche Bewegung einer jeweiligen Klappe 10a, 10b zwischen zwei Stellungen ist hier durch Pfeile 22a, 22b angedeutet. Weiterhin durchströmt der erste Teilmassenstrom 18a das Klimagerät 12 und wird als vom Klimagerät 12 klimatisierter Teilmassenstrom 20a durch den ersten Ausströmer 14a in den Innenraum des Fahrzeugs geleitet. Der zweite Teilmassenstrom 18b an Luft durchströmt ebenfalls das Klimagerät 12 und wird nachfolgend als vom Klimagerät 12 klimatisierter Teilmassenstrom 20b durch den zweiten Ausströmer 14b in den Innenraum des Fahrzeugs geleitet.

Hierbei ist in Ausgestaltung vorgesehen, dass die zweite Zone 8b eine höhere Temperatur als die erste Zone 8a aufweist, wobei die erste Zone 8a auch als Bypasszone bezeichnet werden kann. Entsprechend weist der zweite Teilmassenstrom 18b eine höhere Temperatur als der erste Teilmassenstrom 18a auf. Im Rahmen einer Ausführungsform des erfindungsgemäßen Verfahrens wird der zweite Teilmassenstrom 18b durch die zweite Zone 8b, die auch als Hitzezone bezeichnet werden kann, geleitet.

In der zweiten Zone 8b kann eine Übertemperatur bzw. zu hohe Temperatur entstehen, falls der Anteil des Gesamtmassenstroms 16, der durch die zweite Zone 8b strömt, und aus dem der zweite Teilmassenstrom 18b resultiert, zu klein ist.

Aufgrund einer Unterschiedlichkeit der Temperaturen der beiden Teilmassenströme 18a, 18b weist das Klimagerät 12, das von den Teilmassenströmen 18a, 18b durchströmt wird, eine inhomogene Temperaturverteilung auf, so dass die resultierenden Teilmassenströme 20a, 20b ebenfalls unterschiedliche Temperaturen aufweisen.

Bei der Ausführungsform der Klimavorrichtung 2 ist vorgesehen, dass in dem Steuergerät 38 ein Modell hinterlegt ist, mit dem ein Betrag der Teilmassenströme 18a, 18b, d. h. ein Betrag des mindestens einen Strömungsparameters der Teilmassenströme 18a, 18b, aus Werten des mindestens einen Strömungsparameters der Teilmassenströme 18a, 18b, für sich allein oder in Kombination berechnet wird, wobei ein jeweiliger Wert des mindestens einen Strömungsparameters eines jeweiligen Teilmassenstroms 18a, 18b berücksichtigt wird. Falls sich hierbei ergibt, dass die Temperatur des zweiten Teilmassenstroms 18b zu hoch ist, wird die Heizleistung der zweiten Zone 8b des Zuheizers 6 reduziert.

### Bezugsziffern:

- 2: Klimavorrichtung
- 4: Gebläse
- 6: Zuheizer
- 8a, 8b: Zone
- 10a, 10b: Klappe
- 12: Klimagerät
- 14a, 14b: Ausströmer
- 16: Gesamtmassenstrom
- 18a, 18b: Teilmassenstrom
- 20a, 20b: Teilmassenstrom
- 22a, 22b: Pfeil
- 30: Wand
- 32: Umgebung
- 34: Gesamtdetektor
- 36a, 36b: Teildetektor
- 38: Steuergerät

## Patentansprüche

1. Verfahren zum Klimatisieren, bei dem ein Gesamtmassenstrom (16) an Luft durch einen Zuheizer (6), der mehrere Zonen (8a, 8b) aufweist, geleitet wird, wobei der Gesamtmassenstrom (16) nach Durchströmen des Zuheizers (6) in mehrere Teilmassenströme (18a, 18b) aufgeteilt wird, wobei jeweils aus einer n-ten Zone (8a, 8b) ein n-ter Teilmassenstrom (18a, 18b) strömt, wobei ein Wert mindestens eines Strömungsparameters eines n-ten Teilmassenstroms (18a, 18b) ermittelt wird, wobei mindestens eine Stellgröße einer jeweiligen n-ten Zone (8a, 8b) abhängig von dem Wert des mindestens einen Strömungsparameters eingestellt wird, **dadurch gekennzeichnet, dass**
ein Gebläse (4) dazu ausgebildet ist, den Gesamtmassenstrom (16) an Luft zu erzeugen und durch die Zonen (8a, 8b) des Zuheizers (6) zu leiten, wobei der Wert des mindestens einen Strömungsparameters des n-ten Teilmassenstroms (18a, 18b) berechnet und/oder simuliert und somit ermittelt wird, und ein Betrag des mindestens einen Strömungsparameters aus Werten des mindestens einen Strömungsparameters sämtlicher Teilmassenströme (18a, 18b) durch ein als Gebläsemodell ausgebildetes Modell berechnet wird, mit dem unter Zuhilfenahme einer elektrischen Leistung und/oder Drehzahl als Stellgröße des Gebläses (4) der Gesamtmassenstrom (16) als Volumenstrom der Luft berechnet wird.

2. Verfahren nach Anspruch 1, bei dem ein Wert mindestens eines Strömungsparameters des Gesamtmassenstroms (16) von einem Gesamtdetektor (34), der in einer Strömungsrichtung des Gesamtmassenstroms (16) vor dem Zuheizer (6) angeordnet ist, detektiert und somit ermittelt wird, und/oder bei dem der Wert des mindestens einen Strömungsparameters des n-ten Teilmassenstroms (16a, 16b) von einem n-ten Teildetektor (36a, 36b), der in einer Strömungsrichtung des n-ten Teilmassenstroms (16a, 16b) hinter der n-ten Zone (8a, 8b) angeordnet ist, detektiert und somit ermittelt wird.

3. Verfahren nach Anspruch 2, bei dem als Strömungsparameter eine Strömungsgeschwindigkeit des Gesamtmassenstroms (16) und/oder der jeweiligen Teilmassenströme (18a, 18b) ermittelt wird.

4. Verfahren nach einem der voranstehenden Ansprüche, bei dem der n-te Teilmassenstrom (18a, 18b) durch mindestens eine n-te Klappe (10a, 10b), die in Strömungsrichtung des n-ten Teilmassenstroms (18a, 18b) hinter der n-ten Zone (8a, 8b) des Zuheizers (6) angeordnet ist, umgeleitet wird, wobei eine Stellung der n-ten Klappe (10a, 10b) eingestellt wird.

5. Verfahren nach einem der voranstehenden Ansprüche zum Klimatisieren eines Innenraums eines Fahrzeugs.

6. Verfahren nach einem der voranstehenden Ansprüche, bei dem eine Überhitzung mindestens einer Zone (8a, 8b) des Zuheizers (6) vermieden wird.

7. Klimavorrichtung, die einen Zuheizer (6) mit mehreren Zonen (8a, 8b), und ein Steuergerät (38) aufweist, bei dem der Zuheizer (6) dazu ausgebildet ist, einen Gesamtmassenstrom (16) an Luft, der durch den Zuheizer (6) geleitet wird, nach Durchströmen des Zuheizers (6) in mehrere Teilmassenströme (18a, 18b) aufzuteilen, wobei jeweils aus einer n-ten Zone (8a, 8b) ein n-ter Teilmassenstrom (18a, 18b) resultiert, wobei das Steuergerät (38) dazu ausgebildet ist, einen Wert mindestens eines Strömungsparameters eines n-ten Teilmassenstroms (18a, 18b) zu ermitteln und mindestens eine Stellgröße einer jeweiligen n-ten Zone (8a, 8b) abhängig von dem Wert des mindestens einen Strömungsparameters einzustellen, wobei die Klimavorrichtung ein Gebläse (4) aufweist, das dazu ausgebildet ist, den Gesamtmassenstrom (16) an Luft zu erzeugen und durch die Zonen (18a, 18b) des Zuheizers (6) zu leiten, **dadurch gekennzeichnet, dass**
der Wert des mindestens einen Strömungsparameters des n-ten Teilmassenstroms (18a, 18b) berechnet und/oder simuliert und somit ermittelt wird, wobei ein Betrag des mindestens einen Strömungsparameters aus Werten des mindestens einen Strömungsparameters sämtlicher Teilmassenströme (18a, 18b) durch ein als Gebläsemodell ausgebildetes Modell berechnet wird, mit dem unter Zuhilfenahme einer elektrischen Leistung und/oder Drehzahl als Stellgröße des Gebläses (4) der Gesamtmassenstrom (16) als Volumenstrom der Luft berechnet wird.

8. Klimavorrichtung nach Anspruch 7, die mindestens eine Klappe (10a, 10b) aufweist, die in Strömungsrichtung des Gesamtmassenstroms (16) hinter dem Zuheizer (6) angeordnet sind.

## Claims

1. Method for climate control, in which a total mass flow (16) of air is passed through an auxiliary heater (6) which has multiple zones (8a, 8b), the total mass flow (16), after flowing through the auxiliary heater (6), being divided into multiple partial mass flows (18a, 18b), an nth partial mass flow (18a, 18b) flowing in each case from an nth zone (8a, 8b), a value of at least one flow parameter of an nth partial mass flow (18a, 18b) being determined, at least one manipulated variable of a respective nth zone (8a, 8b) being set as a function of the value of the at least one flow parameter, **characterised in that**
a fan (4)
is adapted to generate and pass the total mass flow (16) of air through the zones (8a, 8b) of the auxiliary heater (6), wherein the value of the at least one flow parameter of the nth partial mass flow (18a, 18b) is calculated and/or simulated and thus determined, and
a magnitude of the at least one flow parameter is calculated from values of the at least one flow parameter of all partial mass flows (18a, 18b) by a model configured as a fan model, with which the total mass flow (16) is calculated as a volumetric flow of the air with the aid of an electrical power and/or rotational speed as a manipulated variable of the fan (4).

2. Method according to claim 1, in which a value of at least one flow parameter of the total mass flow (16) is detected and thus determined by an overall detector (34) arranged upstream of the auxiliary heater (6) in a flow direction of the total mass flow (16), and/or in which the value of the at least one flow parameter of the nth partial mass flow (16a, 16b) is detected and thus determined by an nth partial detector (36a, 36b) which is arranged downstream of the nth zone (8a, 8b) in a flow direction of the nth partial mass flow (16a, 16b).

3. Method according to claim 2, in which a flow velocity of the total mass flow (16) and/or of the respective partial mass flows (18a, 18b) is determined as a flow parameter.

4. Method according to any one of the preceding claims, in which the nth partial mass flow (18a, 18b) is diverted by at least one nth flap (10a, 10b) arranged downstream of the nth zone (8a, 8b) of the auxiliary heater (6) in the flow direction of the nth partial mass flow (18a, 18b), wherein a position of the nth flap (10a, 10b) is set.

5. Method according to any one of the preceding claims for climate control of an interior of a vehicle.

6. Method according to any one of the preceding claims, in which overheating of at least one zone (8a, 8b) of the auxiliary heater (6) is avoided.

7. Climate control device, which has an auxiliary heater (6) with multiple zones (8a, 8b), and a control unit (38), in which the auxiliary heater (6) is adapted to divide a total mass flow (16) of air that is passed through the auxiliary heater (6), after flowing through the auxiliary heater (6), into multiple partial mass flows (18a, 18b), an nth partial mass flow (18a, 18b) resulting in each case from an nth zone (8a, 8b), wherein the control device (38) is adapted to determine a value of at least one flow parameter of an nth partial mass flow (18a, 18b) and to set at least one manipulated variable of a respective nth zone (8a, 8b) as a function of the value of the at least one flow parameter, the climate control device having a fan (4) which is adapted to generate the total mass flow (16) of air and to pass it through the zones (18a, 18b) of the auxiliary heater (6), **characterised in that**
the value of the at least one
flow parameter of the nth partial mass flow (18a, 18b) is calculated and/or simulated and thus determined, a magnitude of the at least one flow parameter being calculated from values of the at least one flow parameter of all partial mass flows (18a, 18b) by a model configured as a fan model, with which the total mass flow (16) is calculated as a volumetric flow of the air with the aid of an electrical power and/or rotational speed as a manipulated variable of the fan (4).

8. Climate control device according to claim 7, which has at least one flap (10a, 10b) arranged downstream of the auxiliary heater (6) in the flow direction of the total mass flow (16).

## Revendications

1. Procédé de climatisation, dans lequel un flux massique total (16) d'air est guidé à travers un dispositif de chauffage d'appoint (6) qui présente plusieurs zones (8a, 8b), dans lequel le flux massique total (16) est divisé en plusieurs flux massiques partiels (18a, 18b) après avoir traversé le dispositif de chauffage d'appoint (6), dans lequel respectivement un n-ième flux massique partiel (18a, 18b) s'écoule d'une n-ième zone (8a, 8b), dans lequel une valeur d'au moins un paramètre d'écoulement d'un n-ième flux massique partiel (18a, 18b) est déterminée, dans lequel au moins une grandeur de réglage d'une n-ième zone (8a, 8b) respective est définie en fonction de la valeur du au moins un paramètre d'écoulement, **caractérisé en ce qu'**un
un ventilateur (4) est
conçu pour produire le flux massique total (16) d'air et le diriger à travers les zones (8a, 8b) du dispositif de chauffage d'appoint (6), dans lequel la valeur du au moins un paramètre d'écoulement du n-ième flux massique partiel (18a, 18b) est calculée et/ou simulée et ainsi déterminée, et
une quantité dudit au moins un paramètre d'écoulement est calculée à partir de valeurs dudit au moins un paramètre d'écoulement de tous les flux massiques partiels (18a, 18b) au moyen d'un modèle réalisé en tant que modèle de ventilateur, avec lequel le flux massique total (16) est calculé en tant que flux volumique de l'air en utilisant une puissance électrique et/ou une vitesse de rotation en tant que grandeur de réglage du ventilateur (4).

2. Procédé selon la revendication 1, dans lequel une valeur d'au moins un paramètre d'écoulement du flux massique total (16) est détectée et donc déterminée par un détecteur total (34) qui est agencé dans une direction d'écoulement du flux massique total (16) en amont du dispositif de chauffage d'appoint (6), et/ou dans lequel la valeur d'au moins un paramètre d'écoulement du n-ième flux massique partiel (16a, 16b) est détectée et ainsi déterminée par un n-ième détecteur partiel (36a, 36b) qui est agencé dans une direction d'écoulement du n-ième flux massique partiel (16a, 16b) en aval de la n-ième zone (8a, 8b).

3. Procédé selon la revendication 2, dans lequel une vitesse d'écoulement du flux massique total (16) et/ou des flux massiques partiels respectifs (18a, 18b) est déterminée comme paramètre(s) d'écoulement.

4. Procédé selon l'une quelconque des revendications précédentes, dans lequel le n-ième débit massique partiel (18a, 18b) est dévié par au moins un n-ième volet (10a, 10b) agencé en aval de la n-ième zone (8a, 8b) du chauffage d'appoint (6) dans le sens d'écoulement du n-ième débit massique partiel (18a, 18b), dans lequel une position du n-ième volet (10a, 10b) est définie.

5. Procédé selon l'une quelconque des revendications précédentes pour la climatisation d'un habitacle d'un véhicule.

6. Procédé selon l'une des revendications précédentes, dans lequel une surchauffe d'au moins une zone (8a, 8b) du dispositif de chauffage d'appoint (6) est évitée.

7. Dispositif de climatisation, qui présente un chauffage d'appoint (6) avec plusieurs zones (8a, 8b), et un dispositif de commande (38), dans lequel le chauffage d'appoint (6) est réalisé de manière à pouvoir diviser un flux massique total (16) d'air, lequel est guidé à travers le chauffage d'appoint (6), après avoir traversé le chauffage d'appoint (6), en une pluralité de flux massiques partiels (18a, 18b), dans lequel il résulte à chaque fois une n-ième flux massique partiel (18a, 18b) d'une n-ième zone (8a, 8b), dans lequel le dispositif de commande (38) est réalisé pour déterminer une valeur d'au moins un paramètre d'écoulement d'un n-ième flux massique partiel (18a, 18b) et définir au moins une grandeur de réglage d'une n-ième zone respective (8a, 8b) en fonction de la valeur du au moins un paramètre d'écoulement, dans lequel le dispositif de climatisation présente un ventilateur (4) qui est réalisé pour produire le flux massique total (16) d'air et le diriger à travers les zones (18a, 18b) du chauffage d'appoint (6), **caractérisé en ce que**
la valeur du au moins un
paramètre d'écoulement du n-ième flux massique partiel (18a, 18b) est calculée et/ou simulée et est ainsi déterminée, dans lequel une valeur du au moins un paramètre d'écoulement est calculée à partir de valeurs du au moins un paramètre d'écoulement de l'ensemble des flux massiques partiels (18a, 18b) par un modèle réalisé en tant que modèle de ventilateur, avec lequel le flux massique total (16) est calculé en tant que flux volumique de l'air au moyen d'une puissance électrique et/ou d'une vitesse de rotation en tant que grandeur de réglage du ventilateur (4).

8. Dispositif de climatisation selon la revendication 7, comprenant au moins un volet (10a, 10b) agencé en aval du dispositif de chauffage d'appoint (6) dans le sens de circulation du flux massique total (16).
